# EUROPÄISCHE PATENTSCHRIFT

(11) **EP 4 234 344 B1**
(45) Veröffentlichungstag und Bekanntmachung des Hinweises auf die Patenterteilung: **11.02.2026**
(21) Anmeldenummer: 23158258.6
(22) Anmeldetag: 23.02.2023
(51) Int. Cl.: B60T 1/12, B61H 7/08, F16D 63/00

(54) **HALTEVORRICHTUNG FÜR EINE SCHIENENFAHRZEUGBREMSE UND FAHRWERK FÜR EIN SCHIENENFAHRZEUG**
HOLDING DEVICE FOR A RAIL VEHICLE BRAKE AND CHASSIS FOR A RAIL VEHICLE
DISPOSITIF DE RETENUE POUR UN FREIN DE VÉHICULE FERROVIAIRE ET CHÂSSIS POUR UN VÉHICULE FERROVIAIRE

(30) Priorität: 28.02.2022 AT 501302022
(43) Veröffentlichungstag der Anmeldung: 30.08.2023
(73) Patentinhaber: Siemens Mobility Austria GmbH, 1210 Wien (AT)
(72) Erfinder: Moser, Christian, 8042 Graz (AT); Prix, Alexander, 8010 Graz (AT); Saleschak, Bernhard, 8045 Graz (AT); Seifried, Radovan, 2000 Maribor (SI)
(74) Vertreter: Siemens Patent Attorneys

(56) Entgegenhaltungen:
- EP-A2- 0 884 232
- GB-A- 191 419 238
- US-A- 2 782 873

## Beschreibung

Die Erfindung betrifft eine Haltevorrichtung für eine auf ein Gleis wirkende kraftschlussunabhängige Bremse.

Schienenfahrzeuge weisen häufig kraftschlussunabhängige Bremsen auf, deren Bremswirkung nicht von Kontaktverhältnissen zwischen einem Rad und einer Schiene abhängt. Eine kraftschlussunabhängige Bremse kann beispielsweise als Magnetschienenbremse oder als lineare Wirbelstrombremse ausgebildet sein und z.B. mit einem Fahrwerksrahmen oder einem Schwingarm einer Radsatzführungsvorrichtung eines Fahrwerks eines Schienenfahrzeugs verbunden sein. Eine Magnetschienenbremse wird zur Bremsung eines Schienenfahrzeugs in Richtung eines Gleises abgesenkt und von einer Magnetkraft aufgrund eines magnetischen Felds auf das Gleis gedrückt, wobei eine Längskraft zwischen dem Gleis und der Magnetschienenbremse eine Bremswirkung erzeugt. Eine lineare Wirbelstrombremse ähnelt konstruktiv einer Magnetschienenbremse, jedoch verbleibt während einer Bremsung eines Schienenfahrzeugs mittels einer linearen Wirbelstrombremse ein Spalt zwischen dem Gleis und der linearen Wirbelstrombremse.

Im Unterschied zur Magnetschienenbremse, bei welcher die Bremswirkung zu einem großen Teil aufgrund von Reibung zwischen der Magnetschienenbremse und dem Gleis gebildet wird, hängt eine Wirbelstrombremskraft von Wirbelströmen bzw. von einer Verzerrung eines instationären Magnetfelds zwischen der linearen Wirbelstrombremse und dem Gleis ab. Neben kraftschlussunabhängigen Bremsen sind für Schienenfahrzeuge auch kraftschlussabhängige Bremsen üblich. Diese können beispielsweise als Radscheibenbremsen, Wellenscheibenbremsen oder als auf Räder wirkende Backen- bzw. Klotzbremsen etc. ausgeführt sein.

Aus dem Stand der Technik ist beispielsweise die DE 10 2018 126 155 A1 bekannt, welche eine Aufhängevorrichtung für eine Magnetschienenbremse eines Schienenfahrzeugs sowie eine Magnetschienenbremse, die mittels der Aufhängevorrichtung mit einem Schienenfahrzeug verbunden ist, zeigt. Die Aufhängevorrichtung weist einen Gewindebolzen, eine Anbindungseinrichtung zur Verbindung der Magnetschienenbremse und eine Einstellmutter auf. Die Magnetschienenbremse ist federnd und über die Aufhängevorrichtung bzw. über die Anbindungseinrichtung, welche in ihrer Position einstellbar ist, höhenverstellbar mit einem Fahrwerksrahmen des Schienenfahrzeugs gekoppelt.

Ferner ist in der DE 100 09 331 A1 eine lineare Wirbelstrombremse eines Schienenfahrzeugs gezeigt, welche über eine Aufhängevorrichtung mit Aktuatoren mit einem Fahrwerksrahmen des Schienenfahrzeugs verbunden ist.

Weitere Haltevorrichtungen für auf ein Gleis wirkende kraftschlussunabhängige Bremsen sind aus US 2 782 873 A, GB 19238 A und EP 0 884 232 A2 bekannt.

Darüber hinaus offenbart die EP 0 665 154 A1 eine Klotzbremse eines Schienenfahrzeugs, welche querbeweglich mit einem Fahrwerksrahmen des Schienenfahrzeugs verbunden ist.

Die genannten Ansätze weisen in ihren bekannten Formen den Nachteil auf, dass keine adapterartigen Bauteile ersichtlich sind, welche eine flexible Ausrüstung von Schienenfahrzeugen mit kraftschlussunabhängigen oder kraftschlussabhängigen Bremsen ermöglichen.

Ferner ist die EP 3 300 988 A1 bekannt, in welcher eine höhenverstellbare Befestigungsvorrichtung eines Schienenfahrzeugs beschrieben ist. Im Zusammenhang mit dieser Befestigungsvorrichtung ist jedoch keine Eignung zur Verbindung einer kraftschlussunabhängigen Bremse mit dem Schienenfahrzeug ersichtlich.

Der Erfindung liegt daher die Aufgabe zugrunde, eine gegenüber dem Stand der Technik weiterentwickelte, multifunktionelle Haltevorrichtung anzugeben.

Erfindungsgemäß wird diese Aufgabe gelöst mit einer Haltevorrichtung nach Anspruch 1, wobei die Haltevorrichtung lösbar mit einem Fahrwerksrahmen eines Schienenfahrzeugs, einer ersten Radsatzführungsvorrichtung eines Schienenfahrzeugs oder einer Radführungsvorrichtung eines Schienenfahrzeugs verbindbar ist und eine Montagekomponente sowie zumindest eine weitere Komponente aus einer Anlegekomponente zur Verbindung der Haltevorrichtung mit der kraftschlussunabhängigen Bremse, einer Mitnahmekomponente zur Bremskraftübertragung von der kraftschlussunabhängigen Bremse auf die Haltevorrichtung sowie einer Zentrierkomponente zur Positionierung der kraftschlussunabhängigen Bremse bezüglich der Haltevorrichtung aufweist. Aufgrund ihrer lösbaren Verbindbarkeit mit Schienenfahrzeugkomponenten kann die Haltevorrichtung mit geringem Aufwand demontiert und beispielsweise durch eine Bremseinheit einer kraftschlussabhängigen Bremse oder durch eine andere Haltevorrichtung etc. ersetzt werden. Die Schienenfahrzeugkomponenten, mit welchen die Haltevorrichtung verbunden werden kann, können variabel eingesetzt werden. Beispielsweise ist eine Anwendung dieser Schienenfahrzeugkomponenten in Fahrwerken, welche mit Magnetschienen- oder Wirbelstrombremsen ausgerüstet werden müssen (beispielsweise aufgrund einer hohen Betriebsgeschwindigkeit des Schienenfahrzeugs und betrieblicher Anforderungen im Zusammenhang mit Zugbeeinflussungssystemen), möglich. Es ist jedoch auch denkbar, diese Schienenfahrzeugkomponenten beispielsweise in klotzgebremsten Fahrwerken einzusetzen. Die Schienenfahrzeugkomponenten können also unabhängig von einer anwendungsspezifisch auszuwählenden Bremseinrichtung ausgebildet sein und müssen lediglich in einer Weise ausgeführt sein, dass die Haltevorrichtung mit diesen verbunden werden kann.

Die Haltevorrichtung weist aufgrund ihrer Montagekomponente sowie ihrer Anlegekomponente, ihrer Mitnahmekomponente und/oder ihrer Zentrierkomponente eine Multifunktionalität auf. Auf Anlege-, Mitnahme- und/oder Zentriervorrichtungen für Bremseinrichtungen kann auf den Schienenfahrzeugkomponenten, mit welchen die Haltevorrichtung verbunden werden kann, verzichtet werden. Dadurch können diese Schienenfahrzeugkomponenten konstruktiv vereinfacht ausgeführt werden bzw. zumindest teilweise vereinheitlicht werden. Weiterhin erfüllt die Haltevorrichtung eine strukturmechanische Funktion.

Weitere vorteilhafte Ausgestaltungen der erfindungsgemäßen Haltevorrichtung ergeben sich aus den Unteransprüchen.

Günstig ist es beispielsweise, wenn die Haltevorrichtung als weitere Komponente die Mitnahmekomponente aufweist, wobei mit der Mitnahmekomponente ein Anschlag aus einem verschleißbeständigen Material verbunden ist.

Durch diese Maßnahme wird die Mitnahmekomponente vor mechanischen Belastungen und Beanspruchungen, welche zu einer Abnutzung der Mitnahmekomponente führen können, geschützt.

Im Zusammenhang mit dem Anschlag kann es hilfreich sein, wenn der Anschlag lösbar mit der Mitnahmekomponente verbunden ist. Dadurch ist ein einfacher und rascher Tausch des Anschlags (z.B. aufgrund übermäßigen Verschleißes oder einer Beschädigung) möglich.

Eine Vorzugslösung erhält man, wenn die Montagekomponente zumindest eine erste Montagebohrung, eine zweite Montagebohrung und eine dritte Montagebohrung aufweist, welche in einem exakt oder annähernd L-förmigen ersten Bohrbild angeordnet sind.

Dadurch wird eine stabile Dreipunktverbindung zwischen der Haltevorrichtung und dem Fahrwerksrahmen, der ersten Radsatzführungsvorrichtung oder der Radführungsvorrichtung ermöglicht.

Günstig ist es weiterhin, wenn die Haltevorrichtung als weitere Komponente die Mitnahmekomponente aufweist, wobei die Mitnahmekomponente parallel oder annähernd parallel zu der Montagekomponente ausgerichtet ist.

Es ist auch möglich, dass die Haltevorrichtung als weitere Komponente die Zentrierkomponente aufweist, wobei die Zentrierkomponente rechtwinklig oder annähernd rechtwinklig zu der Montagekomponente ausgerichtet ist.

Hilfreich kann es auch sein, wenn die Haltevorrichtung als weitere Komponente die Anlegekomponente aufweist, wobei die Anlegekomponente rechtwinklig oder annähernd rechtwinklig zu der Montagekomponente ausgerichtet ist.

Dadurch kann die Haltevorrichtung beispielsweise so mit einem Schienenfahrzeug verbunden werden, dass die Mitnahmekomponente vertikal nach unten weisend ausgerichtet ist und/oder dass die Zentrierkomponente und/oder die Anlegekomponente horizontal von dem Schienenfahrzeug abstehend angeordnet sind.

Vorteilhafte Festigkeitseigenschaften der Haltevorrichtung werden erzielt, wenn die Haltevorrichtung als weitere Komponente die Anlegekomponente aufweist, wobei zwischen der Montagekomponente und der Anlegekomponente ein gekrümmter Übergangsbereich angeordnet ist.

Dadurch werden Risiken im Hinblick auf Kerbspannungen reduziert.

Ein erfolgsversprechendes Anwendungsgebiet für die erfindungsgemäße Haltevorrichtung wird mit einem Fahrwerk für ein Schienenfahrzeug mit zumindest einer erfindungsgemäßen ersten Haltevorrichtung erschlossen, wobei das Fahrwerk einen Fahrwerksrahmen, zumindest einen ersten Radsatz oder zumindest ein Räderpaar aufweist, wobei der zumindest erste Radsatz über zumindest eine erste Radsatzführungsvorrichtung mit dem Fahrwerksrahmen gekoppelt ist oder das zumindest eine Räderpaar über zumindest eine Radführungsvorrichtung mit dem Fahrwerksrahmen gekoppelt ist, wobei die zumindest erste Haltevorrichtung über eine Montagekomponente der zumindest ersten Haltevorrichtung an einer Montageposition des Fahrwerksrahmens mit dem Fahrwerksrahmen, an einer Montageposition der zumindest ersten Radsatzführungsvorrichtung mit der zumindest ersten Radsatzführungsvorrichtung oder an einer Montageposition der zumindest einen Radführungsvorrichtung mit der zumindest einen Radführungsvorrichtung lösbar verbunden ist.

Dadurch kann an der Montageposition beispielsweise anstelle der ersten Haltevorrichtung eine auf den ersten Radsatz oder auf das Räderpaar wirkende kraftschlussabhängige Bremse mit dem Fahrwerksrahmen, mit der zumindest ersten Radsatzführungsvorrichtung oder mit der zumindest einen Radführungsvorrichtung verbunden werden.

Durch diese Maßnahme wird ein multifunktionelles Fahrwerk erreicht, das in Bezug auf dessen Ausrüstung mit einer Bremseinrichtung flexibel ist und dadurch ein breites Anwendungsspektrum aufweist. Beispielsweise ist es möglich, das Fahrwerk anstatt mit einer Klotzbremse über die Haltevorrichtung mit einer Magnetschienenbremse oder einer Wirbelstrombremse auszurüsten, ohne dass hierfür beispielsweise der Fahrwerksrahmen, die erste Radsatzführungsvorrichtung oder die Radführungsvorrichtung angepasst werden muss. Bei Wartungs- oder Instandhaltungsarbeiten ist es möglich, für das erfindungsgemäße Fahrwerk einsetzbare Fahrwerksrahmen, erste Radsatzführungsvorrichtungen oder Radführungsvorrichtungen flexibel zu beschaffen oder vorzuhalten, da diese beispielsweise sowohl für erfindungsgemäße Fahrwerke mit Klotzbremsen als auch für erfindungsgemäße Fahrwerke mit Magnetschienenbremsen oder Wirbelstrombremsen verwendet werden können (z.B. für eine Tausch der Fahrwerksrahmen, der ersten Radsatzführungsvorrichtungen oder der Radführungsvorrichtungen).

Eine einfache Montage oder Demontage der ersten Haltevorrichtung auf dem erfindungsgemäßen Fahrwerk bzw. von dem erfindungsgemäßen Fahrwerk wird ermöglicht, wenn ein erstes Bohrbild der Montagekomponente und ein zweites Bohrbild der Montageposition deckungsgleich oder annähernd deckungsgleich ausgeführt sind.

Dadurch können zur Montage oder Demontage der ersten Haltevorrichtung beispielsweise genormte Befestigungsmittel (z.B. Schrauben) eingesetzt werden. Ein Tausch der ersten Haltevorrichtung (beispielsweise während eines Wartungs-, Instandhaltungs- oder Umrüstvorgangs) verursacht einen geringen Aufwand.

Nachfolgend wird die Erfindung anhand von Ausführungsbeispielen näher erläutert.

Es zeigen beispielhaft:
- Fig. 1:: Einen schematischen Aufriss einer beispielhaften ersten Ausführungsvariante einer erfindungsgemäßen Haltevorrichtung,
- Fig. 2:: Einen schematischen Seitenriss einer beispielhaften zweiten Ausführungsvariante einer erfindungsgemäßen Haltevorrichtung,
- Fig. 3:: Einen Ausschnitt aus einer beispielhaften ersten Ausführungsvariante eines erfindungsgemäßen Fahrwerks eines Schienenfahrzeugs als schematischer Aufriss, wobei eine Magnetschienenbremse über eine erfindungsgemäße Haltevorrichtung mit einem Fahrwerksrahmen verbunden ist,
- Fig. **4:**: Einen Ausschnitt aus einer beispielhaften zweiten Ausführungsvariante eines erfindungsgemäßen Fahrwerks eines Schienenfahrzeugs als schematischer Aufriss, wobei eine Klotzbremse anstelle einer erfindungsgemäßen Haltevorrichtung mit einem Fahrwerksrahmen verbunden ist, und
- Fig. 5:: Einen Ausschnitt aus einer beispielhaften dritten Ausführungsvariante eines erfindungsgemäßen Fahrwerks eines Schienenfahrzeugs als schematischer Aufriss, wobei eine Montageposition auf einer ersten Radsatzführungsvorrichtung angeordnet ist, über welche eine erfindungsgemäße Haltevorrichtung oder eine kraftschlussabhängige Bremse mit der ersten Radsatzführungsvorrichtung verbunden werden kann.

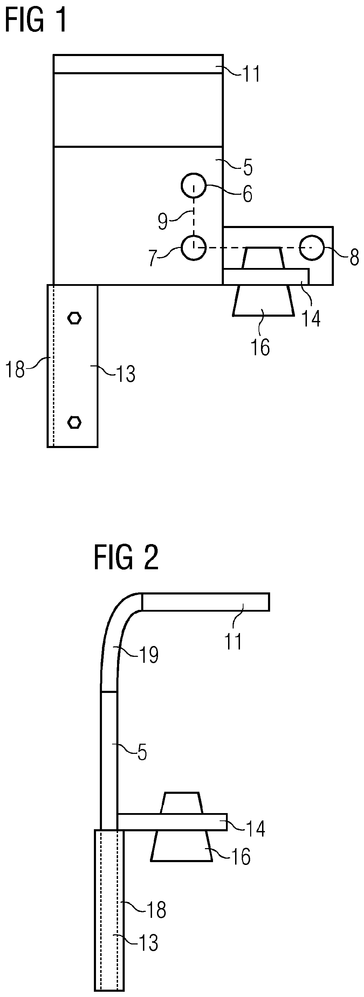

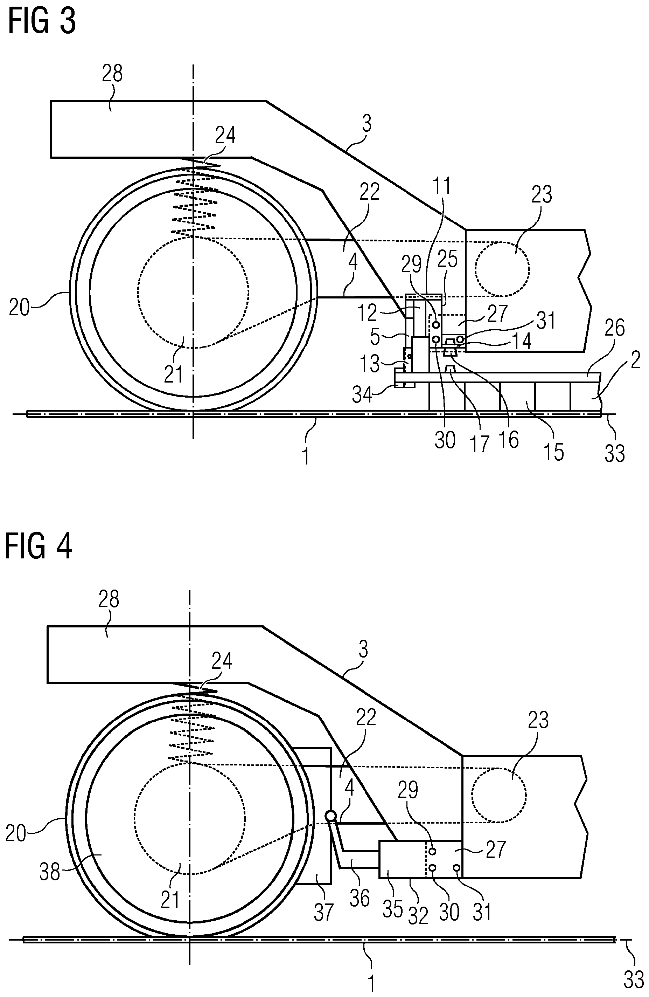

Fig. 1 zeigt einen Aufriss einer beispielhaften ersten Ausführungsvariante einer erfindungsgemäßen Haltevorrichtung für eine auf ein beispielsweise in Fig. 3 dargestelltes Gleis 1 wirkende kraftschlussunabhängige Bremse 2 eines Fahrwerks eines Schienenfahrzeugs, wie es beispielhaft in Fig. 3 offenbart ist. Bei der kraftschlussunabhängigen Bremse 2 handelt es sich demnach um eine Schienenfahrzeugbremse.

Die Haltevorrichtung kann lösbar mit einem Fahrwerksrahmen 3, oder einer ersten Radsatzführungsvorrichtung 4 bzw. einer Radführungsvorrichtung des Fahrwerks verbunden sein.

Eine Verbindung der Haltevorrichtung mit dem Schienenfahrzeug kann über eine Montagekomponente 5 der Haltevorrichtung erfolgen.

Die Montagekomponente 5 weist daher eine erste Montagebohrung 6, eine zweite Montagebohrung 7 und eine dritte Montagebohrung 8 auf, welche in einem L-förmigen ersten Bohrbild 9 angeordnet sind und über welche die Haltevorrichtung mit dem Fahrwerksrahmen 3, der ersten Radsatzführungsvorrichtung 4 bzw. der Radführungsvorrichtung verschraubt werden kann.

Ferner umfasst die Haltevorrichtung eine Anlegekomponente 11 zur lösbaren Verbindung der Haltevorrichtung mit einem Bremsaktuator 12 der kraftschlussunabhängigen Bremse 2, eine Mitnahmekomponente 13 zur Bremskraftübertragung von der kraftschlussunabhängigen Bremse 2 auf die Haltevorrichtung sowie eine Zentrierkomponente 14 zur Positionierung einer ersten Bremsmagnetanordnung 15 der kraftschlussunabhängigen Bremse 2 bezüglich der Haltevorrichtung. Die Zentrierkomponente 14 ist als Lasche ausgebildet und mit einem hohlen ersten Zentrierkonus 16 verschraubt. In den ersten Zentrierkonus 16 kann zur Positionierung ein als Vollteil ausgebildeter zweiter Zentrierkonus 17 der kraftschlussunabhängigen Bremse 2 eingeführt werden.

Die Montagekomponente 5, die Anlegekomponente 11, die Mitnahmekomponente 13 und die Zentrierkomponente 14 sind monolithisch, d.h. als ein Stück, und in Stahl ausgebildet. Erfindungsgemäß ist es jedoch auch vorstellbar, dass die Montagekomponente 5, die Anlegekomponente 11, die Mitnahmekomponente 13 und die Zentrierkomponente 14 beispielsweise kraft- oder stoffschlüssig (z.B. durch Verschraubung oder Verschweißung) miteinander verbunden sind. Weiterhin ist es beispielsweise möglich, auf die Mitnahmekomponente 13 als Teil der Haltevorrichtung zu verzichten und diese stattdessen z.B. als Teil des Fahrwerksrahmens 3 auszubilden.

Die Mitnahmekomponente 13 ist parallel zu der Montagekomponente 5 ausgerichtet und weist zeigerartig vertikal nach unten. Die Zentrierkomponente 14 und die Anlegekomponente 11 sind rechtwinklig zu der Montagekomponente 5 sowie horizontal ausgerichtet und sind von der Montagekomponente 5 in gleicher Richtung abstehend angeordnet.

Mit der Mitnahmekomponente 13 ist ein C-profilförmiger Anschlag 18 aus einem harten Stahl und somit aus einem verschleißbeständigen Material verschraubt, d.h. lösbar verbunden.

In Fig. 2 ist ein schematischer Seitenriss einer beispielhaften zweiten Ausführungsvariante einer erfindungsgemäßen Haltevorrichtung offenbart. Diese beispielhafte zweite Ausführungsvorrichtung entspricht jener beispielhaften ersten Ausführungsvorrichtung einer erfindungsgemäßen Haltevorrichtung, die in Fig. 1 gezeigt ist. Es werden daher in Fig. 2 teilweise gleiche Bezugszeichen wie in Fig. 1 verwendet.

In Fig. 2 ist erkennbar, dass zwischen einer Montagekomponente 5 und einer Anlegekomponente 11 der Haltevorrichtung ein gekrümmter Übergangsbereich 19 angeordnet ist.

Erfindungsgemäß ist es auch denkbar, dass sich der Übergangsbereich 19 in die Montagekomponente 5 und/oder die Anlegekomponente 11 erstreckt.

Weiterhin ist in Fig. 2 ersichtlich, dass die Anlegekomponente 11 und eine Zentrierkomponente 14 der Haltevorrichtung rechtwinklig zu der Montagekomponente 5 sowie horizontal ausgerichtet und von der Montagekomponente 5 in gleicher Richtung abstehend angeordnet sind.

In Fig. 3 ist ein Ausschnitt aus einer beispielhaften ersten Ausführungsvariante eines erfindungsgemäßen Fahrwerks eines Schienenfahrzeugs als schematischer Aufriss dargestellt.

Das Fahrwerk weist einen Fahrwerksrahmen 3 sowie einen ersten Radsatz 20 und einen in Fig. 3 nicht gezeigten zweiten Radsatz auf. Der erste Radsatz 20 ist über eine erste Radsatzführungsvorrichtung 4 und eine konstruktiv gleich wie die erste Radsatzführungsvorrichtung 4, jedoch in Fig. 3 nicht sichtbare zweite Radsatzführungsvorrichtung mit dem Fahrwerksrahmen 3 gekoppelt. Die erste Radsatzführungsvorrichtung 4 weist ein in Fig. 3 nicht sichtbares, von einem Radsatzlagergehäuse 21 ummanteltes Radsatzlager, einen Schwingarm 22 und eine Radsatzführungsbuchse 23 auf.

Der zweite Radsatz ist über zwei weitere, konstruktiv gleich wie die erste Radsatzführungsvorrichtung 4 ausgeführte Radsatzführungsvorrichtungen, die in Fig. 3 nicht gezeigt sind, mit dem Fahrwerksrahmen 3 verbunden.

Zwischen dem Radsatzlagergehäuse 21 und dem Fahrwerksrahmen 3 ist eine erste Primärfeder 24 angeordnet. Zwischen der zweiten Radsatzführungsvorrichtung sowie den weiteren Radsatzführungsvorrichtungen einerseits und dem Fahrwerksrahmen 3 andererseits sind drei weitere, in Fig. 3 nicht sichtbare bzw. in Fig. 3 nicht gezeigte Primärfedern angeordnet.

Der erste Radsatz 20 und der zweite Radsatz sind über eine Innenlagerung mit dem Fahrwerksrahmen 3 verbunden. Erfindungsgemäß ist jedoch auch eine Außenlagerung zur Verbindung des ersten Radsatzes 20 und des zweiten Radsatzes mit dem Fahrwerksrahmen 3 vorstellbar.

Weiterhin ist es erfindungsgemäß möglich, dass das Fahrwerk keinen Radsatz im eigentlichen Sinn, sondern beispielsweise einen Losradsatz oder ein Räderpaar mit Einzelrädern aufweist, welche über Radführungsvorrichtungen mit dem Fahrwerksrahmen 3 verbunden sind.

Das Fahrwerk weist eine erste Haltevorrichtung 25, wie sie beispielhaft in Fig. 1 und Fig. 2 gezeigt ist, sowie drei weitere, zu der ersten Haltevorrichtung 25 konstruktionsgleiche Haltevorrichtungen, die in Fig. 3 nicht sichtbar bzw. in Fig. 3 nicht gezeigt sind, auf. Über die erste Haltevorrichtung 25 und die weiteren Haltevorrichtungen ist eine als Magnetschienenbremse ausgebildete kraftschlussunabhängige Bremse 2, d.h. eine Schienenfahrzeugbremse, die auf ein Gleis 1 wirkt, mit dem Fahrwerksrahmen 3 verbunden. Mit einem rechteckigen Rahmen 26 der kraftschlussunabhängigen Bremse 2 sind eine erste Bremsmagnetanordnung 15 und eine in Fig. 3 nicht sichtbare zweite Bremsmagnetanordnung gekoppelt.

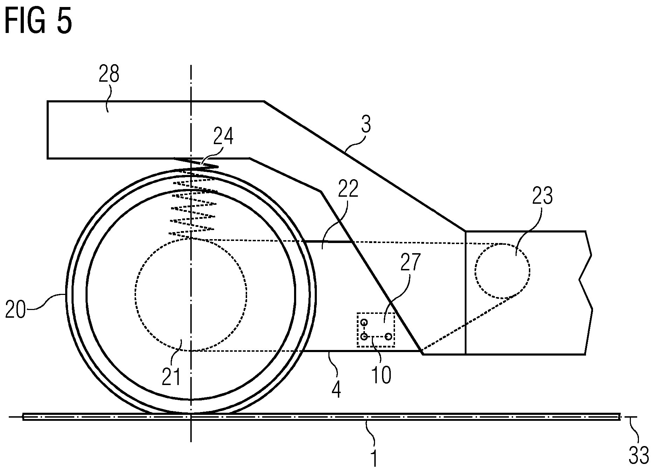

Die erste Haltevorrichtung 25 ist über eine Montagekomponente 5 der ersten Haltevorrichtung 25 an einer Montageposition 27 eines Längsträgers 28 des Fahrwerksrahmens 3 über eine erste Schraube 29, eine zweite Schraube 30 und eine dritte Schraube 31, welche, analog zu dem in Fig. 1 gezeigten L-förmigen ersten Bohrbild 9 der Montagekomponente 5, L-förmig angeordnet sind, lösbar mit dem Fahrwerksrahmen 3 verbunden. Das erste Bohrbild 9 der Montagekomponente 5 und ein zweites Bohrbild 10 der Montageposition 27, wie es beispielhaft in Fig. 5 für eine Radsatzführungsvorrichtung gezeigt ist, sind dementsprechend deckungsgleich ausgeführt.

Anstelle der ersten Haltevorrichtung 25 und der weiteren Haltevorrichtungen können auf den ersten Radsatz 20 und auf den zweiten Radsatz wirkende Bremseinheiten mit dem Fahrwerksrahmen 3 verbunden sein. In Fig. 4 ist beispielsweise eine als Klotzbremse ausgebildete, über die Montageposition 27 mit dem Fahrwerksrahmen 3 verbundene kraftschlussabhängige Bremse 32 dargestellt.

Eine Mitnahmekomponente 13 der ersten Haltevorrichtung 25 ist zur Übertragung von Bremskräften der kraftschlussunabhängigen Bremse 2 in Richtung einer Gleislängsachse 33 ausgebildet. Während einer in Fig. 3 beispielhaft dargestellten Bremsung mittels der kraftschlussunabhängigen Bremse 2 kontaktiert ein Kontaktteil 34, welches mit dem Rahmen 26 verbunden ist, die Mitnahmekomponente 13, wodurch die Bremskräfte von der kraftschlussunabhängigen Bremse 2 über die erste Haltevorrichtung 25 in den Fahrwerksrahmen 3 übertragen werden.

Die erste Haltevorrichtung 25 weist weiterhin eine Zentrierkomponente 14 zur Positionierung der kraftschlussunabhängigen Bremse 2 bezüglich der ersten Haltevorrichtung 25 auf. Die Zentrierkomponente 14 ist als Lasche ausgebildet, mit welcher ein hohler erster Zentrierkonus 16 verschraubt ist. Zur Positionierung, welche am Ende eines Hubvorgangs der in Fig. 3 auf das Gleis 1 abgesenkt dargestellten kraftschlussunabhängigen Bremse 2 durchgeführt wird, wird ein als Vollteil ausgebildeter zweiter Zentrierkonus 17, welcher mit dem Rahmen 26 verbunden ist, in den ersten Zentrierkonus 16 eingeführt.

Hubvorgänge der kraftschlussunabhängigen Bremse 2 werden mittels eines Bremsaktuators 12 der kraftschlussunabhängigen Bremse 2, welcher einen pneumatisch betätigten Kolben, der in einem Zylinder geführt ist, aufweist und mit dem Rahmen 26 verbunden ist, durchgeführt. Der Bremsaktuator 12 ist mit einer Anlegekomponente 11 der ersten Haltevorrichtung 25 verschraubt, d.h. lösbar verbunden.

Die weiteren Haltevorrichtungen sind nach verbindungstechnisch gleichem Prinzip und mittels konstruktionsgleicher Bauteile wie im Zusammenhang mit der ersten Haltevorrichtung 25 beschrieben mit dem Fahrwerksrahmen 3 und mit der kraftschlussunabhängigen Bremse 2 verbunden. Auch die Bremskraftübertragung von der kraftschlussunabhängigen Bremse 2 und die Positionierung der kraftschlussunabhängigen Bremse 2 erfolgen im Zusammenhang mit den weiteren Haltevorrichtungen nach gleichem Prinzip und mittels konstruktionsgleicher Bauteile wie im Zusammenhang mit der ersten Haltevorrichtung 25 beschrieben.

Die kraftschlussunabhängige Bremse 2 ist wie erwähnt als Magnetschienenbremse ausgebildet. Erfindungsgemäß ist es jedoch auch möglich, dass anstatt der Magnetschienenbremse z.B. eine lineare Wirbelstrombremse als kraftschlussunabhängige Bremse 2 eingesetzt ist.

Fig. 4 zeigt einen Ausschnitt aus einer beispielhaften zweiten Ausführungsvariante eines erfindungsgemäßen Fahrwerks eines Schienenfahrzeugs als Aufriss.

Diese beispielhafte zweite Ausführungsvariante ähnelt jener beispielhaften ersten Ausführungsvariante eines erfindungsgemäßen Fahrwerks, die in Fig. 3 dargestellt ist. Es werden daher in Fig. 4 teilweise gleiche Bezugszeichen wie in Fig. 3 verwendet.

Im Unterschied zu Fig. 3 zeigt Fig. 4 keine erste Haltevorrichtung 25 und keine kraftschlussunabhängige Bremse 2, wie sie beispielhaft in Fig. 3 dargestellt sind.

Anstelle der ersten Haltevorrichtung 25 ist eine auf einen ersten Radsatz 20 des Fahrwerks wirkende kraftschlussabhängige Bremse 32 mit einem Fahrwerksrahmen 3 des Fahrwerks lösbar verbunden.

Die kraftschlussabhängige Bremse 32 ist als Klotzbremse ausgebildet, welche einen Klotzbremsaktuator 35, ein Gestänge 36 und einen Bremsklotz 37 aufweist. Der Bremsklotz 37 ist über das Gestänge 36 mit dem Klotzbremsaktuator 35 verbunden und liegt in einem aktiven, das Fahrwerk bremsenden Bremszustand, wie er in Fig. 4 dargestellt ist, an einem Rad 38 des ersten Radsatzes 20 an. Der Klotzbremsaktuator 35 ist als pneumatischer Aktuator ausgebildet und über jene Montageposition 27 auf einem Längsträger 28 des Fahrwerksrahmens 3, über welche für die beispielhafte erste Ausführungsvariante eines erfindungsgemäßen Fahrwerks gemäß Fig. 3 die kraftschlussunabhängige Bremse 2 über die erste Haltevorrichtung 25 mit dem Fahrwerksrahmen 3 verbunden ist, mit dem Fahrwerksrahmen 3 verbunden. Der Klotzbremsaktuator 35 ist dabei nach verbindungstechnisch gleichem Prinzip wie für die erste Haltevorrichtung 25 angewendet über eine erste Schraube 29, eine zweite Schraube 30 und eine dritte Schraube 31, welche in L-Form angeordnet sind, an der Montageposition 27 mit dem Längsträger 28 verschraubt.

Fig. 5 offenbart einen Ausschnitt aus einer beispielhaften dritten Ausführungsvariante eines erfindungsgemäßen Fahrwerks eines Schienenfahrzeugs als Aufriss.

Diese beispielhafte dritte Ausführungsvariante ähnelt jener beispielhaften ersten Ausführungsvariante eines erfindungsgemäßen Fahrwerks, die in Fig. 3 dargestellt ist. Es werden daher in Fig. 5 teilweise gleiche Bezugszeichen wie in Fig. 3 verwendet.

Im Unterschied zu Fig. 3 weist eine erste Radsatzführungsvorrichtung 4 des Fahrwerks von Fig. 5, über welche ein erster Radsatz 20 des Fahrwerks mit einem Fahrwerksrahmen 3 des Fahrwerks gekoppelt ist, eine Montageposition 27 auf, über welche eine erste Haltevorrichtung 25 und eine kraftschlussunabhängige Bremse 2, wie sie beispielhaft in Fig. 3 gezeigt sind, oder eine kraftschlussabhängige Bremse 32, wie sie beispielhaft in Fig. 4 dargestellt ist, mit der ersten Radsatzführungsvorrichtung 4 verbunden werden können.

Beispielsweise kann die erste Haltevorrichtung 25 über ein erstes Bohrbild 9 einer Montagekomponente 5 der ersten Haltevorrichtung 25 und ein deckungsgleich mit dem ersten Bohrbild 9 ausgeführtes zweites Bohrbild 10 der Montageposition 27 mit der ersten Radsatzführungsvorrichtung 4 verbunden werden. Mit der ersten Haltevorrichtung 25 kann wiederum die kraftschlussunabhängige Bremse 2 (z.B. eine Magnetschienenbremse oder eine lineare Wirbelstrombremse, die auf ein Gleis 1 wirken, etc.) lösbar verbunden sein. Alternativ ist es möglich, dass über das zweite Bohrbild 10 beispielsweise ein Klotzbremsaktuator 35 der kraftschlussabhängigen Bremse 32 mit der ersten Radsatzführungsvorrichtung 4 verbunden ist, wobei die kraftschlussabhängige Bremse 32 auf den ersten Radsatz 20 wirken kann.

Erfindungsgemäß ist es auch denkbar, dass das Fahrwerk anstatt der ersten Radsatzführungsvorrichtung 4, welche den ersten Radsatz 20 führt, eine Radführungsvorrichtung, welche beispielsweise ein Räderpaar eines Losradsatzes führt, aufweist.

### Liste der Bezeichnungen

- 1: Gleis
- 2: Kraftschlussunabhängige Bremse
- 3: Fahrwerksrahmen
- 4: Erste Radsatzführungsvorrichtung
- 5: Montagekomponente
- 6: Erste Montagebohrung
- 7: Zweite Montagebohrung
- 8: Dritte Montagebohrung
- 9: Erstes Bohrbild
- 10: Zweites Bohrbild
- 11: Anlegekomponente
- 12: Bremsaktuator
- 13: Mitnahmekomponente
- 14: Zentrierkomponente
- 15: Erste Bremsmagnetanordnung
- 16: Erster Zentrierkonus
- 17: Zweiter Zentrierkonus
- 18: Anschlag
- 19: Übergangsbereich
- 20: Erster Radsatz
- 21: Radsatzlagergehäuse
- 22: Schwingarm
- 23: Radsatzführungsbuchse
- 24: Erste Primärfeder
- 25: Erste Haltevorrichtung
- 26: Rahmen
- 27: Montageposition
- 28: Längsträger
- 29: Erste Schraube
- 30: Zweite Schraube
- 31: Dritte Schraube
- 32: Kraftschlussabhängige Bremse
- 33: Gleislängsachse
- 34: Kontaktteil
- 35: Klotzbremsaktuator
- 36: Gestänge
- 37: Bremsklotz
- 38: Rad

## Patentansprüche

1. Haltevorrichtung für eine auf ein Gleis (1) wirkende kraftschlussunabhängige Bremse (2), wobei die Haltevorrichtung lösbar mit einem Fahrwerksrahmen (3) eines Schienenfahrzeugs, einer ersten Radsatzführungsvorrichtung (4) eines Schienenfahrzeugs oder einer Radführungsvorrichtung eines Schienenfahrzeugs verbindbar ist und eine Montagekomponente (5) sowie eine Anlegekomponente (11) zur Verbindung der Haltevorrichtung mit der kraftschlussunabhängigen Bremse (2) und eine Mitnahmekomponente (13) zur Bremskraftübertragung von der kraftschlussunabhängigen Bremse (2) auf die Haltevorrichtung aufweist,
**dadurch gekennzeichnet, dass** die Haltevorrichtung eine Zentrierkomponente (14) zur Positionierung der kraftschlussunabhängigen Bremse (2) bezüglich der Haltevorrichtung aufweist.

2. Haltevorrichtung nach Anspruch 1, **dadurch gekennzeichnet, dass** die Montagekomponente (5), die Anlegekomponente (11), die Mitnahmekomponente (13) und die Zentrierkomponente (14) als ein Stück ausgebildet sind.

3. Haltevorrichtung nach Anspruch 1, **dadurch gekennzeichnet, dass** die Montagekomponente (5), die Anlegekomponente (11), die Mitnahmekomponente (13) und die Zentrierkomponente (14) miteinander verbunden sind.

4. Haltevorrichtung nach einem der Ansprüche 1 bis 3, **dadurch gekennzeichnet, dass** mit der Mitnahmekomponente (13) ein Anschlag (18) aus einem verschleißbeständigen Material verbunden ist.

5. Haltevorrichtung nach Anspruch 4, **dadurch gekennzeichnet, dass** der Anschlag (18) lösbar mit der Mitnahmekomponente (13) verbunden ist.

6. Haltevorrichtung nach einem der Ansprüche 1 bis 5, **dadurch gekennzeichnet, dass** die Mitnahmekomponente (13) zur Übertragung von Bremskräften in Richtung einer Gleislängsachse (33) ausgebildet ist.

7. Haltevorrichtung nach einem der Ansprüche 1 bis 6, **dadurch gekennzeichnet, dass** die Montagekomponente (5) zumindest eine erste Montagebohrung (6), eine zweite Montagebohrung (7) und eine dritte Montagebohrung (8) aufweist, welche in einem exakt L-förmigen ersten Bohrbild (9) angeordnet sind.

8. Haltevorrichtung nach einem der Ansprüche 1 bis 7, **dadurch gekennzeichnet, dass** die Mitnahmekomponente (13) parallel zu der Montagekomponente (5) ausgerichtet ist.

9. Haltevorrichtung nach einem der Ansprüche 1 bis 8, **dadurch gekennzeichnet, dass** die Zentrierkomponente (14) rechtwinklig zu der Montagekomponente (5) ausgerichtet ist.

10. Haltevorrichtung nach einem der Ansprüche 1 bis 9, **dadurch gekennzeichnet, dass** die Anlegekomponente (11) rechtwinklig zu der Montagekomponente (5) ausgerichtet ist.

11. Haltevorrichtung nach einem der Ansprüche 1 bis 10, **dadurch gekennzeichnet, dass** zwischen der Montagekomponente (5) und der Anlegekomponente (11) ein gekrümmter Übergangsbereich (19) angeordnet ist.

12. Fahrwerk für ein Schienenfahrzeug mit zumindest einer ersten Haltevorrichtung (25) nach einem der Ansprüche 1 bis 11, mit einem Fahrwerksrahmen (3) und mit zumindest einem ersten Radsatz (20) oder mit zumindest einem Räderpaar, wobei der zumindest erste Radsatz (20) über zumindest eine erste Radsatzführungsvorrichtung (4) mit dem Fahrwerksrahmen (3) gekoppelt ist oder das zumindest eine Räderpaar über zumindest eine Radführungsvorrichtung mit dem Fahrwerksrahmen (3) gekoppelt ist, **dadurch gekennzeichnet, dass** die zumindest erste Haltevorrichtung (25) über die Montagekomponente (5) der zumindest ersten Haltevorrichtung (25) an einer Montageposition (27) des Fahrwerksrahmens (3) mit dem Fahrwerksrahmen (3), an einer Montageposition (27) der zumindest ersten Radsatzführungsvorrichtung (4) mit der zumindest ersten Radsatzführungsvorrichtung (4) oder an einer Montageposition (27) der zumindest einen Radführungsvorrichtung mit der zumindest einen Radführungsvorrichtung lösbar verbunden ist.

13. Fahrwerk nach Anspruch 12, **dadurch gekennzeichnet, dass** ein erstes Bohrbild (9) der Montagekomponente (5) und ein zweites Bohrbild (10) der Montageposition (27) deckungsgleich ausgeführt sind.

14. Fahrwerk nach Anspruch 12 oder 13, **dadurch gekennzeichnet, dass** ein Längsträger (28) des Fahrwerksrahmens (3) die Montageposition (27) aufweist.

## Claims

1. Holding device for an adhesion independent brake (2) which acts on a track (1), wherein the holding device can be connected to a chassis frame (3) of a rail vehicle, a first wheelset guidance device (4) of a rail vehicle or a wheel guidance device of a rail vehicle in a detachable manner, and has an assembly component (5) as well as an attachment component (11) for connecting the holding device to the adhesion independent brake (2) and a drive component (13) for transferring the brake force from the adhesion independent brake (2) to the holding device, **characterised in that** the holding device has a centring component (14) for positioning the adhesion independent brake (2) with respect to the holding device.

2. Holding device according to claim 1, **characterised in that** the mounting component (5), the attachment component (11), the drive component (13) and the centring component (14) are embodied as one piece.

3. Holding device according to claim 1, **characterised in that** the mounting component (5), the attachment component (11), the drive component (13) and the centring component (14) are connected to one another.

4. Holding device according to one of claims 1 to 3, **characterised in that** a stop (18) made from a wear-resistant material is connected to the drive component (13).

5. Holding device according to claim 4, **characterised in that** the stop (18) is connected to the drive component (13) in a detachable manner.

6. Holding device according to one of claims 1 to 5, **characterised in that** the drive component (13) is embodied to transfer the brake forces in the direction of a longitudinal axis of the track (33).

7. Holding device according to one of claims 1 to 6, **characterised in that** the mounting component (5) has at least one first mounting bore (6), a second mounting bore (7) and a third mounting bore (8), which are arranged in a precisely L-shaped first bore image (9).

8. Holding device according to one of claims 1 to 7, **characterised in that** the drive component (13) is aligned parallel to the mounting component (5).

9. Holding device according to one of claims 1 to 8, **characterised in that** the centring component (14) is aligned at a right angle to the mounting component (5).

10. Holding device according to one of claims 1 to 9, **characterised in that** the attachment component (11) is aligned at a right angle to the mounting component (5).

11. Holding device according to one of claims 1 to 10, **characterised in that** a curved transition region (19) is arranged between the mounting component (5) and the attachment component (11).

12. Chassis for a rail vehicle with at least one first holding device (25) according to one of claims 1 to 11, with a chassis frame (3) and with at least one first wheelset (20) or with at least one pair of wheels, wherein the at least first wheelset (20) is coupled to the chassis frame (3) by way of at least one first wheelset guidance device (4) or the at least one pair of wheels is coupled to the chassis frame (3) by way of at least one wheel guidance device, **characterised in that** the at least first holding device (25) is detachably connected to the chassis frame (3) by way of the mounting component (5) of the at least first holding device (25) at a mounting position (27) of the chassis frame (3), to the at least first wheelset guidance device (4) at an assembly position (27) of the at least first wheelset guidance device (4) or to the at least one wheel guidance device at a mounting position (27) of the at least one wheel guidance device.

13. Chassis according to claim 12, **characterised in that** a first bore image (9) of the mounting component (5) and a second bore image (10) of the mounting position (27) are designed to be congruent.

14. Chassis according to claim 12 or 13, **characterised in that** a longitudinal carrier (28) of the chassis frame (3) has the mounting position (27).

## Revendications

1. Dispositif de retenue pour un frein (2) indépendant de la complémentarité de forces agissant sur un rail (1), dans lequel le dispositif de retenue peut être relié à une armature de châssis (3) d'un véhicule ferroviaire, à un premier dispositif de guidage de jeu de roues (4) d'un véhicule ferroviaire ou à un dispositif de guidage de roue d'un véhicule ferroviaire et présente un composant de montage (5) ainsi qu'un composant de raccordement (11) permettant la liaison du dispositif de retenue avec le frein (2) indépendant de la complémentarité de forces et un composant d'entraînement (13) permettant la transmission de force de freinage du frein (2) indépendant de la complémentarité de forces sur le dispositif de retenue, **caractérisé en ce que** le dispositif de retenue présente un composant de centrage (14) permettant le positionnement du frein (2) indépendant de la complémentarité de forces en ce qui concerne le dispositif de retenue.

2. Dispositif de retenue selon la revendication 1, **caractérisé en ce que** le composant de montage (5), le composant de raccordement (11), le composant d'entraînement (13) et le composant de centrage (14) sont configurés d'un seul tenant.

3. Dispositif de retenue selon la revendication 1, **caractérisé en ce que** le composant de montage (5), le composant de raccordement (11), le composant d'entraînement (13) et le composant de centrage (14) sont reliés les uns aux autres.

4. Dispositif de retenue selon l'une quelconque des revendications 1 à 3, **caractérisé en ce qu'**une butée (18) en matériau résistant à l'usure est reliée au composant d'entraînement (13).

5. Dispositif de retenue selon la revendication 4, **caractérisé en ce que** la butée (18) est reliée de manière amovible au composant d'entraînement (13).

6. Dispositif de retenue selon l'une quelconque des revendications 1 à 5, **caractérisé en ce que** le composant d'entraînement (13) est configuré pour la transmission de forces de freinage dans la direction d'un axe longitudinal de rail (33).

7. Dispositif de retenue selon l'une quelconque des revendications 1 à 6, **caractérisé en ce que** le composant de montage (5) présente au moins un premier perçage de montage (6), un deuxième perçage de montage (7) et un troisième perçage de montage (8), lesquels sont disposés dans un premier schéma de perçage (9) exactement en forme de L.

8. Dispositif de retenue selon l'une quelconque des revendications 1 à 7, **caractérisé en ce que** le composant d'entraînement (13) est orienté parallèlement au composant de montage (5).

9. Dispositif de retenue selon l'une quelconque des revendications 1 à 8, **caractérisé en ce que** le composant de centrage (14) est orienté perpendiculairement au composant de montage (5).

10. Dispositif de retenue selon l'une quelconque des revendications 1 à 9, **caractérisé en ce que** le composant de raccordement (11) est orienté perpendiculairement au composant de montage (5).

11. Dispositif de retenue selon l'une quelconque des revendications 1 à 10, **caractérisé en ce que**, entre le composant de montage (5) et le composant de raccordement (11), une zone de transition courbée (19) est disposée.

12. Châssis pour un véhicule ferroviaire avec au moins un premier dispositif de retenue (25) selon l'une quelconque des revendications 1 à 11, avec une armature de châssis (3) et avec au moins un premier jeu de roues (20) ou avec au moins une paire de roues, dans lequel l'au moins un premier jeu de roues (20) est couplé à l'armature de châssis (3) par le biais d'au moins un premier dispositif de guidage de jeu de roues (4) ou l'au moins une paire de roues est couplée à l'armature de châssis (3) par le biais d'au moins un dispositif de guidage de roues, **caractérisé en ce que** l'au moins premier dispositif de retenue (25) est relié de manière amovible par le biais du composant de montage (5) de l'au moins premier dispositif de retenue (25) au niveau d'une position de montage (27) de l'armature de châssis (3) à l'armature de châssis (3), au niveau d'une position de montage (27) de l'au moins premier dispositif de guidage de jeu de roues (4) à l'au moins premier dispositif de guidage de roues (4) ou au niveau d'une position de montage (27) de l'au moins un dispositif de guidage de roues à l'au moins un dispositif de guidage de roues.

13. Châssis selon la revendication 12, **caractérisé en ce qu'**un premier schéma de perçage (9) du composant de montage (5) et un second schéma de perçage (10) de la position de montage (27) sont réalisés de manière identique.

14. Châssis selon la revendication 12 ou 13, **caractérisé en ce qu'**un longeron (28) de l'armature de châssis (3) présente la position de montage (27).
